Europäisches Patentamt

European Patent Office

Office européen des brevets

(19)

(11) Veröffentlichungsnummer: **0 074 530**
**B1**

(12) # EUROPÄISCHE PATENTSCHRIFT

(45) Veröffentlichungstag der Patentschrift:
30.04.86

(51) Int. Cl.⁴: **C 02 F 1/46**

(21) Anmeldenummer: **82107779.9**

(22) Anmeldetag: **25.08.82**

(54) **Verfahren zur Abscheidung von in verunreinigtem Wasser enthaltenen Stoffen und Vorrichtung zur Durchführung des Verfahrens.**

(30) Priorität: 07.09.81 CH 5736/81
31.03.82 CH 1970/82

(43) Veröffentlichungstag der Anmeldung:
23.03.83 Patentblatt 83/12

(45) Bekanntmachung des Hinweises auf die Patenterteilung:
30.04.86 Patentblatt 86/18

(84) Benannte Vertragsstaaten:
**AT DE**

(56) Entgegenhaltungen:
**DE - A - 2 131 879**
**DE - A - 2 131 880**
**DE - A - 2 604 371**
**FR - A - 2 459 782**
**GB - A - 2 031 025**
**US - A - 2 535 035**
**US - A - 3 485 729**

**Die Akte enthält technische Angaben, die nach dem Eingang der Anmeldung eingereicht wurden und die nicht in dieser Patentschrift enthalten sind.**

(73) Patentinhaber: **Perren, Benno, Austrasse 33,
CH-5430 Wettingen (CH)**

(72) Erfinder: **Perren, Benno, Austrasse 33,
CH-5430 Wettingen (CH)**

(74) Vertreter: **Winkler, Kurt, Dr., Mellingerstrasse 69,
CH-5400 Baden (CH)**

## Beschreibung

Die Erfindung betrifft ein Verfahren zur Abscheidung von in verunreinigtem, elektrisch leitfähigem Wasser enthaltenen Stoffen unter Verwendung wenigstens eines mindestens zwei Elektroden aufweisenden Elektrolyse-Aggregats, dessen Anode als Opferanode ausgebildet ist, wobei durch den Elektrolysevorgang an der Anode Kationen und an der Kathode Wasserstoff und Hydroxyl-Ionen entstehen, und die Kationen bei Berührung mit den Hydroxyl-Ionen zu Metallhydroxiden reagieren, welche die Wasserinhaltsstoffe unter Bildung von Flocken adsorbieren, und nachher die gebildeten Flocken zur Klärung des Wassers abgeschieden werden, ferner betrifft die Erfindung eine Vorrichtung zur Durchführung des Verfahrens.

Nahezu alle Wässer aus Industriebetrieben und Garagen weisen Verunreinigungen auf, welche von biologischen Kläranlagen nur ungenügend oder gar nicht gereinigt werden können. Diese Wässer verlassen daher praktisch ungereinigt, nur verdünnt die Kläranlage und belasten demzufolge den Vorfluter. Aus diesem Grunde besteht in den meisten Ländern die Forderung, diese Wässer einer Reinigung zu unterziehen. Die Wasserinhaltsstoffe können sowohl organischer als auch anorganischer Natur sein, sie können echt gelöst oder als Kolloide, als dispergierte oder emulgierte Teilchen im Wasser vorliegen.

Für die Reinigung des Wassers ist eine Reihe von Verfahren bekannt. Eines der angewandten Verfahren besteht darin, dass die Wasserinhaltsstoffe an Metallhydroxide dreiwertiger Kationen unter Bildung von Flocken adsorbiert werden. Die entstandenen Flocken können dann durch Zentrifugation, Filtration oder Flotation vom geklärten Wasser abgetrennt werden. Die Bildung der Metallhydroxide erfolgt dabei in einem Elektrolyse-Aggregat mit Hilfe von Opferanoden innerhalb einer beide Elektroden umspülenden wässrigen, elektrisch leitfähigen Lösung. Solche Opferanoden bestehn aus einem Metall, das in der Lage ist, dreiwertige Kationen zu bilden. Den Opferanoden gegenübergestellt sind Kathoden meist aus inertem Material wie rostfreier Stahl, Tantal, Graphit, ja sogar aus Gold oder Platin.

Der Vorgang der Hydroxidbildung vollzieht sich unter dem Einfluss der an die Elektroden angelegten Spanaung, indem das Metall der Anode als Kation in Lösung geht und als solches mit den sich im Bereich der Anode besonders stark konzentrierten Hydroxyl-Ionen fast augenblicklich zu Metallhydroxid reagiert. An der Kathode entsteht bei genügend hoher Spannung eine der Kationenkonzentration äquivalente Wasserstoffmenge und Hydroxyl-Ionenmenge.

Als nachteilig hat sich bei diesem Vorgang der Umstand erwiesen, dass einerseits wegen der starken Hydroxyl-Konzentration im Bereich der Anode diese einer direkten Oxidation unterworfen wird und sich auf diese Weise ein isolierender Überzug von Metalloxid über die Anodenfläche ausbildet. Andererseits wurde beobachtet, dass sich gewisse positive Ladungsträger unter den Wasserinhaltsstoffen auf der Kathode ablagern können und diese ebenfalls isolierend überziehen. Diese beiden synergetischen Vorgänge auf den elektroden bewirken nach einer gewissen, verhältnismässig kurzen Elektrolysezeit ein Absinken des Elektrolysestroms, wobei es bis zum Erliegen des ganzen Elektrolysevorgangs kommen kann.

Es ist auch eine Anlage zur elektrochemischen Schmutzwasserreinigung bekannt (FR-A-2 459 782), bei welcher zwischen den Elektroden stabförmige Trennwände angebracht sind, wodurch mehrere, vom Schmutzwasser durchströmte Vertikalkanäle entstehen. Auf diese Weise wird eine erhöhte Strömungsgeschwindigkeit und damit ein gewisser mechanischer Reinigungseffekt für die Elektroden erzielt. Ein Schutz der Anode vor der Einwirkung der an der Kathode entstehenden Hydroxyl-Ionen und vor der dadurch verursachten Bildung eines isolierenden Belages von Metalloxid wird bei dieser Anlage nicht erzielt.

Ein Dauerbetrieb war bisher mit keiner der bekannten Vorrichtungen dieser Art möglich.

Der Erfindung liegt die Aufgabe zugrunde, ein Verfahren für die eingangs genannte Anwendung anzugeben, das durch Schutz der Elektroden vor Belagsbildung kontinuierlich ablaufen kann, sowie eine entsprechende Vorrichtung für diesen Zweck zu schaffen.

Das Verfahren zur Lösung dieser Aufgabe besteht darin, dass eine Prozessflüssigkeit kontinuierlich zuerst über die Anode geführt wird und erst nachher, gegebenenfalls nach Vermischung mit verunreinigtem Wasser, in den Bereich der Kathode gebracht wird.

Die Vorrichtung zur Durchführung dieses Verfahrens ist dadurch gekennzeichnet dass eine Ummantelung der Anode zur Führung der Prozessflüssigkeit derart angeordnet ist, dass diese Prozessflüssigkeit zuerst über die Anode und erst nacher in den Bereich der Kathode gebracht wird und dass die Schaltung eine Serienschaltung der Anode und der Kathode hinsichtlich der sie bespülenden Prozessflüssigkeit ist. Da die Anode erfindungsgemäss nur mit gänlich oder nahezu hydroxylionenfreier Prozessflüssigkeit in Berührung kommt, tritt praktisch keine Oxidation der Anode ein. In den Bereich der Kathode gelangt nur verunreinigtes Wasser, das mit den an der Anode entstandenen Kationen durchsetzt ist, welche sofort mit den an der Kathode entstehenden Hydroxyl-Ionen zu Metallhydroxiden reagieren. Diese adsorbieren unter Flockenbildung die Wasserihaltsstoffe, welche nun keine Möglichkeit mehr haben, auf der Kathode einen Belag zu bilden. Durch die gezielte Führung der Flüssigkeit über die Anode oder wahlweise nacheinander über beide Elektroden und der daraus resultierenden Zunahme der Strömungsgeschwindigkeit wird der Reinhalteeffekt noch erhöht. Sollte, z.B. bei besonders schwer zu behandelnden Verschmutzungsarten, trotzdem noch eine störende Belagsbildung auftreten, so kann diese durch eine zusätzliche, an sich bekannte Beaufschlagung der Elektroden - insbesondere der Anodedurch Ultraschall mit Sicherheit vermieden werden.

Durch die Vermeidung der Belagsbildung an den Elektroden sinkt der Elektrolysestrom nicht ab, es kann daher eine nach diesem Verfahren konzipierte Vorrichtung nicht nur kurzzeitig, bestenfalls wenige Stunden arbeiten, sondern ermöglicht einen dauernden, Tag und Nacht durchgehenden Betrieb. Sie erlaubt die Reinigung z.B. von öl- und fettverschmutzten, auch tensidhaltigen Garagen-Abwässern, von Bohr- und Schneidölen aus der Industire, von latexhaltigen Abwässern usw. und sogar die Aufbereitung non Trinkwasser.

Nachstehend werden anhand der beiliegenden Zeichnung schematisch dargestellte Ausführungsbeispiele der Erfindung näher beschrieben. Es zeigen:

Fig.1 eine Vorrichtung, in welcher im Abscheidungsprozess gereinigtes Wasser über die Anode geführt wird;

Fig.2 eine Vorrichtung, in welcher verunreinigtes Wasser über die Anode geführt wird.

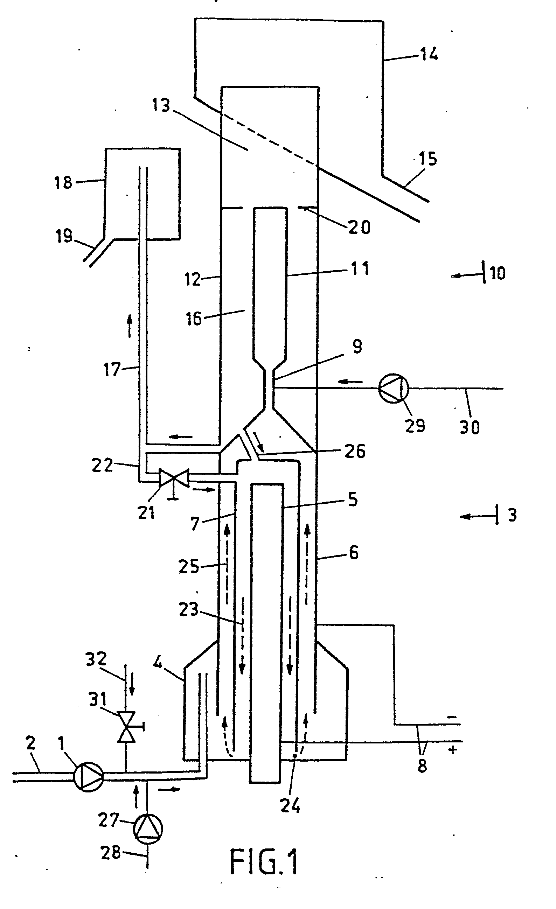

Nach Fig.1 wird das zu reinigende Wasser - nötigenfalls muss es vorher elektrisch leitend gemacht werden - von der Zulaufpumpe 1 kontinuierlich durch die Zulaufleitung 2 in das Elektrolyse-Aggregat 3 gefördert, das im wesentlichen aus dem Behälter 4, der stabförmigen Anode 5, der zylindermantelförmigen Kathode 6 und der in einem Abstand die Anode 5 umgebenden, oben abgeschlossenen Ummantelung 7 besteht.

Die beiden Elektroden 5 und 6 werden über die elektrischen Leitungen 8 unter Gleichstrom gesetzt. Damit die Anode 5 die Funktion einer Opferanode übernehmen kann, besteht sie aus einem trivalenten, hydroxidbildenden Metall, z.B. aus Aluminium, Eisen oder aus einer diese Metalle enthaltenden Legierung. Die Kathode 6 besteht vorzugsweise aus einem inerten Material.

Bei der Förderung des verunreinigten Wassers durch das Elektrolyse-Aggregat bilden sich Flocken, wie weiter unten noch eingehender beschrieben wird, die vom Wasser mitgeführt werden.

Aus dem Elektrolyse-Aggregat 3 gelangt das Wasser mit den darin enthaltenen Flocken durch die Verbindungsleitung 9 zum Abscheider 10. Es wird zuerst dem inneren Rohr 11 zugeführt, das es von unten nach oben durchströmt. Beim Austritt aus dem inneren Rohr 11 wird das Wasser vom äusseren Rohr 12 aufgefangen, welches koaxial zum Rohr 11 angeordnet ist und dieses um ein Stück überragt. Im oberen Teil 13 des Rohres 12 beruhigt sich die Strömung, und die Flocken steigen weiter nach oben. Sobald diese schlammartige Ansammlung den oberen Rand des Rohres 12 übersteigt, wird sie vom Sammler 14 aufgefangen und fliesst durch den Ablauf 15 ab.

Das solcherart geklärte, nun saubere Wasser fliesst durch den zwischen innerem Rohr 11 und äusserem Rohr 12 gebildeten Strömungsraum 16 nach unten, steigt in der Leitung 17 hoch und tritt in den Sammler 18 aus, von wo es durch den Auslauf 19 abgeleitet wird. Sollte das Wasser noch nicht genügend ausgeflockt sein, so ist es zweckmässig, im Strömungsraum 16 eine Unstetigkeit vorzusehen, die z. B. von der Blende 20, aber ebenso durch das Rohr 12 selbst gebildet sein kann. Das innere Rohr 11 ist dafür schlechter zu verwenden. Wichtig ist eine Querschnittsänderung und anschliessende Verzögerung der Strömung in einer Beruhigungsstrecke, auf der im Wasser noch mitgeführte Flocken sich verbinden und hochsteigen können.

Von der Leitung 17 zweigt die vom Drosselventil 21 kontrollierte Leitung 22 ab, um einen Teil des bereits gereinigten Wassers in die Ummantelung 7 hineinzuführen. Besteht letztere aus einem Metallrohr, so ist dafür zu sorgen, dass sie nicht von der Kathode 6 her über die Zweigleitung 22 unter Strom gesetzt wird. Zu diesem Zwekke müssen entweder alle Leitungsdurchbrüche elektrisch isoliert sein oder es kann auch der obere Teil der Ummantelung 7, in welchen die Leitung 22 einmündet, aus einem nicht-leitenden Material gefertigt sein. Besteht die gesamte Ummantelung z.B. aus einem nicht-leitenden Kunststoff, welcher den Fluss des elektrischen Stromes zwischen den Elektroden stören würde, dann ist sie mit einem metallischen Überzug zu versehen.

Für den Betrieb des Elektrolyse-Aggregats haben sich eine Spannungsdifferenz zwischen den Elektroden von 1,2 bis 35 Volt und eine Stromdichte von 5 bis 100 mA/cm² Elektrodenfläche am besten bewährt. Sobald das Aggregat unter Spannung gesetzt ist, geht, wie schon erwähnt, das Metall der Anode als Kation in Lösung und wird von dem durch die Zweigleitung 22 in die Ummantelung 7 eintretenden Wasser in Richtung der Pfeile 23 nach unten geführt. Das die Kationen enthaltende Wasser strömt bei 24 um den unteren Rand der Ummantelung 7 in den Behälter 4 aus, wo es sich mit dem durch die Zulaufleitung 2 zugeführten verunreinigten Wasser vermischt, worauf das Gemisch entlang der Kathode 6 in Richtung der Pfeile 25 nach oben strömt. Die an der Kathode entstehenden Hydroxyl-Ionen reagieren sofort mit den vorbeigeführten Kationen zu Metallhydroxid, welches die Wasserinhaltsstoffe unter Bildung von Flokken adsorbiert, die im Abscheider 10 abgeschieden werden, wie weiter oben schon beschrieben wurde.

Der gleichzeitig an der Kathode entstehende, in Blasen rasch aufsteigende Wasserstoff verleiht der Strömung entlang der Kathode eine hohe kinetische Energie, die einerseits einen mechanischen Reinigungseffekt hervorruft, andererseits sich in einer entsprechenden Saugwirkung äussert. Diese wirkt sich nicht nur auf das ohnehin unter Druck zugeführte verunreinigte Wasser aus, sondern gleicherweise auf das die Kationen aufnehmende gereinigte Wasser innerhalb der Ummantelung 7 der Anode 5. Das Wasser in der Zweigleitung 22 steht daher sowohl unter dem hydrostatischen Druck der Steigleitung 17 als auch unter der eben genannten Saugwirkung. Die solcherart vorhandene Druckdifferenz in der Leitung 22 genügt in den meisten Fällen, um einen gewünschten Teil des bereits gereinigten Wassers in die Ummantelung 7 rückzuführen. Die Menge kann durch das Drosselventil 21 geregelt werden. Für den Fall jedoch, dass die Druckdifferenz nicht ausreichen sollte, kann zusätzlich oder statt des Drosselventils eine Pumpe vorgesehen werden.

Für die Wasserzuführung in die Ummantelung 7 ist aus Fig.1 noch eine Variante zu ersehen. Danach wird gereinigtes Wasser aus dem unteren Teil des Strömungsraumes 16 durch die Verbindungsleitung 26 direkt in die Ummantelung 7 geleitet. Auf die Leitung 26 wirken ähnliche Druck- bzw. Unterdruckkräfte ein wie auf die Zweigleitung 22. Eine einfache Mengenregelung ist derart möglich, dass die Spannungsdifferenz zwischen den Elektroden 5,6 geändert wird. Bei einer Erhöhung der Spannungsdifferenz wird die Erzeugung von Wasserstoff an der Kathode 6 und damit die Saugwirkung auf den Inhalt der Ummantelung 7 vergrössert, was zu einer grösseren Durchflussmenge durch die Leitung 26 führt. Selbstverständlich kann auch in der Leitung 26 ein Regelorgan, z.B. eine von aussen betätigbare Drosselklappe vorgesehen werden.

Es wäre auch die Zufuhr von sauberem Fremdwasser in die Ummantelung 7 möglich, doch ist es günstiger, die Durchsatzmenge der Vorrichtung nicht unnötig zu vergrössern.

Die Durchsatzmenge verunreinigten Wassers durch die Vorrichtung wird vorteilhafterweise in Abhängigkeit vom beispielsweise durch Trübungsmessung bestimmten - Reinheitsgrad des gereinigten Wassers geregelt, z.B. durch Drehzahländerung der Zulaufpumpe 1 oder durch ein Regelventil in der Zulaufleitung 2. Durch Änderung der durch die Zweigleitung 22 oder durch die Verbindungsleitung 26 in die Ummantelung 7 rückgeführten Teilmenge gereinigten Wassers ist eine weitere Regelmöglichkeit gegeben, indem Durchsatzmenge und Rezirkulationsmenge im Verhältnis zueinander abgestimmt werden. Dabei ist zu beachten, dass bei Vergrösserung der über die Anode 5 geführten Menge gereinigten Wassers das verunreinigte Wasser stärker verdünnt wird, was bei hohem Verschmutzungsgrad von Vorteil sein kann. Ferner sei noch erwähnt, dass die Spannungsdifferenz zwischen den Elektroden bei allen Ausführungen der erfindungsgemässen Vorrichtung für eine Regelung herangezogen werden kann.

Sind die im Elektrolyse-Aggregat gebildeten Flocken zu fein und ihre Abscheidung daher schwierig, so ist es zweckmässig, dem Wasser ein Flockungshilfsmittel beizufügen. Dies kann schon vor dem Eintritt des verschmutzten Wassers in das Elektrolyse-Aggregat 3 mit der Pumpe 27 durch die Leitung 28 erfolgen, um die Durchmischung zu verbessern und den Reaktionsweg zu verlängern, oder kann hinter dem Aggregat mit der Pumpe 29 durch die Leitung 30 in die Verbindungsleitung 9 geschehen. Auf diese Weise können noch grössere Flocken gebildet werden, die sich leichter abscheiden lassen. Es ist auch möglich, vor und nach der Elektrolyse je ein Plockungshilfsmittel - oder auch deren mehrere - dem Wasser zuzuführen. In diesem Falle kann vor der Elektrolyse ein anionisches oder ein kationisches Flockungshilfsmittel beigefügt werden, nach der Elektrolyse ein kationisches bzw. ein anionisches. Welches Flockungshilfsmittel am besten zu verwenden ist, hängt im wesentlichen von der Beschaffenheit der Wasserinhaltsstoffe ab. Bei Aufarbeitung von Wässern aus galvanischen Betrieben hat sich ein durch Vernetzung erzeugter hochmolekularer Eiweissstoff als Flockungshilfsmittel sehr bewährt.

Für die Reinigung von sehr verschmutzten, insbesondere von Wässern mit sehr verschiedenen Inhaltsstoffen hat sich die Serienschaltung von zwei Vorrichtungen als sehr wirksam erwiesen. Durch entsprechende Wahl unterschiedlicher Flockungshilfsmittel ist es möglich, beispielsweise in der ersten Reinigungsphase, also in der ersten Vorrichtung, den Schmutz und Rohlenwasserstoffe zu entfernen, und in der zweiten Phase im Wasser enthaltene Schwermetalle auszuflocken.

Es kann vorkommen, dass trotz kleiner Durchflussmenge die Reinigung des Wassers wegen zu hohem Verschmutzungsgrad nicht genügend ist. Falls auch eine Vorreinigung des Wassers, z.B. durch Vorschalten eines Filters, nicht ausreichend hilft, bleibt nichts anderes übrig, als das zu reinigende Wasser zu verdünnen. Das kann durch Zufuhr sauberen Wassers über die vom Ventil 31 kontrollierte Leitung 32 in die Zulaufleitung 2 erfolgen. Eine weitere Möglichkeit besteht darin, in der Vorrichtung bereits geklärtes Wasser in die Zulaufleitung 2 rückzuführen, was durch eine weitere, von der Steigleitung 17 abzweigende Leitung geschehen kann.

Bei besonders schwer zu behandelnden Wasserinhaltsstoffen kann es auch vorkommen, dass trotz geführter Strömung nach längerer Betriebszeit an den Elektroden die eingangs erwähnten isolierenden Belage entstehen. Eine Möglichkeit, sie zu vermeiden, besteht darin, dass eine oder beide Elektroden - es kommt in erster Linie die Anode dafür in Frage - in longitudinale Schwingungen versetzt wird, was z.B. durch einen an der Elektrode befestigten Ultraschall-Schwingungsgeber erfolgen kann. Die so erzeugten Schwingungen müssen so stark sein, dass pulsierende Querschnittsänderungen in der Elektrode auftreten. Auf diese Weise können

sogar schon gebildete Beläge auf der Elektrode abgesprengt werden.

Bei einer Betriebsunterbrechung können sich die Wasserinhaltsstoffe an den Elektroden anlegen und bei langem Stillstand können sich die Beläge auch noch verdichten. Es ist daher vorteilhaft, bei einem Stillstand das Elektrolyse-Aggregat sogleich durchzuspülen. Zu diesem Zwecke wird beispielsweise durch die Leitung 32 kurzzeitig sauberes Wasser zugeführt, bis der Inhalt des Aggregats durch sauberes Wasser ersetzt ist.

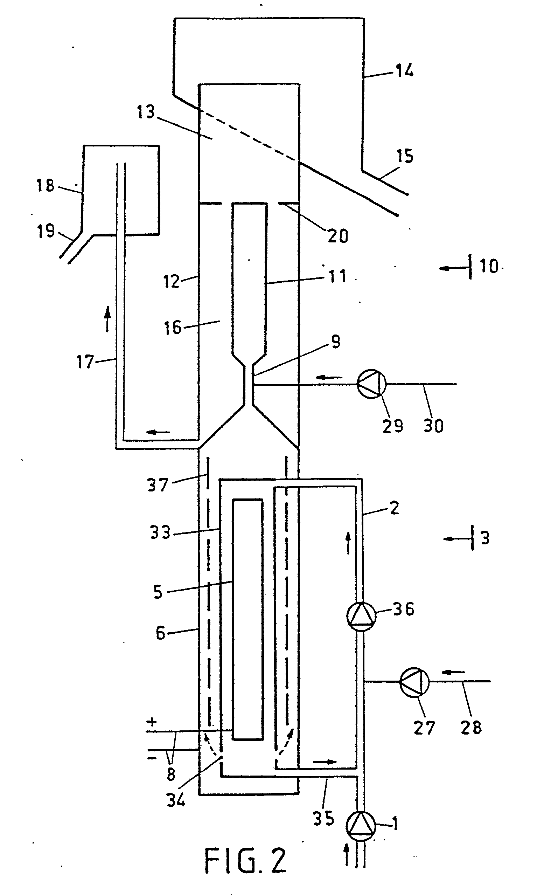

Eine Variante zu der beschriebenen Vorrichtung ist in Fig.2 dargestellt. Hier wird das verunreinigte Wasser von der Zulaufpumpe 1 über die Zulaufleitung 2 direkt in die Ummantelung 33 der Anode 5 geleitet. Für das Material der Ummantelung 33 gelten sinngemäss die gleichen Bedingungen wie für die Ummantelung 7 in Fig.1.

Durch die direkte Berührung der Anode 5 mit dem verunreinigten Wasser ist die Möglichkeit einer Ablagerung von Wasserinhaltsstoffen an dieser Elektrode vorhanden, was aber von der Art und Beschaffenheit der Verunreinigungen abhängt. Derartige Ablagerungen werden durch die Anordnung der Rezirkulationsleitung 35 von der Ummantelung 33 zur Zulaufleitung 2 und der Umwälzpumpe 36 in der Leitung 2 vermieden. Durch Drehzahlregelung der Pumpe 36 oder durch eine regelbare Drosselstelle im derart gebildeten Kreislauf hat man es in der Hand, das verunreinigte Wasser praktisch beliebig oft rezirkulieren zu lassen, bevor es durch die Öffnungen 34 austritt, um weiter entlang der Kathode 6 zu strömen. Die Umwälzmenge durch die Ummantelung 33 wird durch die Rezirkulation eines Teils des verunreinigten Wassers erhöht und das Wasser daher mit einer grösseren Geschwindigkeit über die Anode 5 geführt, als der Durchsatzmenge durch die Vorrichtung entspricht. Beispielsweise durch entsprechende Wahl der Drehzahlen der Zulaufpumpe 1 und der Umwälzpumpe 36 können die Durchsatz menge und die Rezirkulationsmenge aufeinander abgestimmt werden. Eine solche Regelung erlaubt eine sehr elastische Anpassung der Vorrichtung an die verschiedensten Betriebsbedingungen.

Eine einfachere Ausführung ergibt sich, wenn die Rezirkulationsleitung 35 und die Umwälzpumpe 36 weggelassen werden. Die Ummantelung 33 wird dann mit einer kleineren, der Durchsatzmenge verunreinigten Wassers durch die Vorrichtung entsprechenden Geschwindigkeit durchströmt. Eine solche Ausführung kann vorteilhaft gewählt werden, wenn die Verschmutzung des Wassers und die Neigung zu Ablagerungen an der Anode nur gering sind.

Um das aus der Dmmantelung austretende, die Kationen enthaltende verunreinigte Wasser dichter entlang der Kathode 6 zu führen, kann das Diaphragma 37 zwischen der Ummantelung 33 und der Kathode 6 angeordnet werden. Durch die kathodisch gebildeten, rasch aufsteigenden Wasserstoffblasen entwickelt sich eine starke Aufwärtsströmung, die über den oberen Diaphragmarand in eine entsprechende Gegenströmung nach abwärts zwischen Ummantelung 33 und Diaphragma 37 umgelenkt wird. Am unteren Diaphragmarand stellt sich eine änliche Umlenkung der Strömung zur Kathode 6 hin ein. Auf diese Weise entsteht eine interne Zirkulationsströmung hoher kinetischer Energie. Die Folge ist ein grosser mechanischer Reinigungseffekt, welcher praktisch bei allen technisch vorkommenden Betriebsbedingungen die Bildung eines Belages an der Kathode verhindert.

Auch für das Diaphragma sind bei der Materialwahl ähnliche Erfordernisse wie für die Ummantelung der Anode zu beachten. Ist es aus Metall, so ergeben sich keine Schwierigkeiten. Besteht es jedoch aus einem nicht-leitenden Material, welches den Stromfluss zwischen den Elektroden stören würde, dann ist es mit einem metallischen Überzug zu versehen oder es sind Durchlassöffnungen anzubringen.

In den Ausführungsbeispielen der Zeichnung sind alle Kathoden als Zylindermäntel ausgebildet, welche die stabförmigen Anoden umschliessen. Es sei ausdrücklich erwähnt, dass selbstverständlich auch plattenförmige Elektroden und mehr als nur ein Paar verwendet werden können.

**Patentansprüche**

1. Verfahren zur Abscheidung von in verunreinigtem, elektrisch leitfähigem Wasser enthaltenen Stoffen unter Verwendung wenigstens eines mindestens zwei Elektroden aufweisenden Elektrolyse-Aggregats, dessen Anode als Opferanode ausgebildet ist, wobei durch den Elektrolyse-Vorgang an der Anode Kationen und an der Kathode Wasserstoff und Hydroxyl-Ionen entstehen, und die Kationen bei Berührung mit den Hydroxyl-Ionen zu Metallhydroxiden reagieren, welche die Wasserinhaltsstoffe unter Bildung von Flocken adsorbieren, und nachher die gebildeten Flocken zur Klärung des Wassers abgeschieden werden, dadurch <u>gekennzeichnet</u>, dass eine Prozessflüssigkeit kontinuierlich zuerst über die Anode (5) geführt wird und erst nachher, gegebenenfalls nach Vermischung mit verunreinigtem Wasser, in den Bereich der Kathode (6) gebracht wird.

2. Verfahren nach Anspruch 1, dadurch gekennzeichnet, dass die Prozessflüssigkeit zuerst über die Anode (5) und nachher über die Kathode (6) geführt wird.

3. Verfahren nach Anspruch 1, dadurch gekennzeichnet, dass verunreinigtes Wasser über die Anode (5) geführt wird.

4. Verfahren nach Anspruch 3, dadurch gekennzeichnet, dass das verunreinigte Wasser durch Rezirkulation eines Teils desselben mit einer grösseren Geschwindigkeit über die Anode (5) geführt wird, als der Durchsatzmenge durch das Elektrolyse-Aggregat (3) entspricht.

5. Verfahren nach Anspruch 4, dadurch gekennzeichnet, dass die Durchsatzmenge und die Rezirkulationsmenge im Verhältnis zueinander geregelt werden.

6. Verfahren nach Anspruch 1, dadurch gekennzeichnet, dass im Abscheidungsprozess gereinigtes Wasser über die Anode (5) geführt wird.

7. Verfahren nach Anspruch 6, dadurch gekennzeichnet, dass die Menge des über die Anode (5) geführten gereinigten Wassers und die Durchsatzmenge verunreinigten Wassers im Verhältnis zueinander geregelt werden.

8. Verfahren nach Anspruch 1, dadurch gekennzeichnet, dass die Durchsatzmenge verunreinigten Wassers durch das Elektrolyse-Aggregat (3) in Abhängigkeit vom Reinheitsgrad des gereinigten Wassers geregelt wird.

9. Verfahren nach Anspruch 1, dadurch gekennzeichnet, dass dem verunreinigten Wasser vor und/oder nach der Elektrolyse mindestens ein Flockungshilfsmittel beigefügt wird.

10. Verfahren nach Anspruch 9, dadurch gekennzeichnet, dass dem verunreinigten Wasser vor der Elektrolyse ein anionisches oder ein kationisches Flockungshilfsmittel und nach der Elektrolyse ein kationisches bzw. ein anionisches Flockungshilfsmittel beigefügt wird.

11. Verfahren nach Anspruch 9, dadurch gekennzeichnet, dass als Flockungshilfsmittel ein durch Vernetzung erzeugter hochmolekularer Eiweissstoff verwendet wird.

12. Verfahren nach Anspruch 9, dadurch gekennzeichnet, dass bei einer Serienschaltung von zwei Elektrolyse-Aggregaten (3) vor und/oder nach der Elektrolyse jeweils unterschiedliche Flockungshilfsmittel beigefügt werden.

13. Verfahren nach Anspruch 1, dadurch gekennzeichnes, dass die Spannungsdifferenz zwischen den Elektroden (5,6) 1,2 bis 35 Volt und die Stromdichte 5 bis 100 mA/cm$^2$ Elektrodenfläche beträgt.

14. Verfahren nach Anspruch 1, dadurch gekennzeichnet, dass wenigstens eine Elektrode (5,6) in longitudinale Schwingungen versetzt wird.

15. Verfahren nach Anspruch 1, dadurch gekennzeichnet, dass das Elektrolyse-Aggregat (3) nach dem Abschalten des Stromes mit sauberem Wasser durchgespült wird.

16. Vorrichtung zur Durchfürung des Verfahrens nach Anspruch 1, die aus einem mit einem Zulauf (2) und einem Ablauf (15) für die Prozessflüssigkeit vorgesehen Behälter (4) besteht, wobei eine Opferanode (5) und eine Kathode (6) im Behälter (4) angeordnet sind und eine elektrische Schaltung zur Einspeisung der Opferanode (5) und der Kathode (6) vorgesehen ist, dadurch gekennzeichnet, dass eine Ummantelung (7,33) der Anode (5) zur Führung der Prozessflüssigkeit derart angeordnet ist, dass diese Prozessflüssikeit zuerst über die Anode (5) und erst nacher in den Bereich der Kathode (6) gebracht wird und dass die Schaltung eine Serienschaltung der Anode (5) und der Kathode (6) hibsichtlich der sie bespülenden Prozessflüssigkeit ist.

17. Vorrichtung nach Anspruch 16, gekennzeichnet durch ein Diaphragma (37) zwischen der Kathode (6) und der Ummantelung (33).

18. Vorrichtung nach Anspruch 17, dadurch gekennzeichnet, dass das Diaphragma (37) zumindest an seiner Oberfläche elektrisch leitend ist.

19. Vorrichtung nach Anspruch 16, dadurch gekennzeichnet, dass an mindestens einer Elektrode (5,6) ein Ultraschall-Schwingungsgeber befestigt ist.

**Claims**

1. Process for the deposition of substances contained in contaminated, electrically conductive water, using at least one elektrolysis unit comprising at least two electrodes, the anode of which is designed as a sacrificial anode, the electrolysis process producing cations at the anode, and hydrogen and hydroxyl ions at the cathode, and the cations reacting on contact with the hydroxyl ions to form metal hydroxides which adsorb the substances present in the water with the formation of coagulates, and the coagulates formed then being deposited for clarifying the water, characterized in that a process fluid is continuously passed first across the anode (5) and is transferred into the zone of the cathode (6) only afterwards, if appropriate after mixing with contaminated water.

2. Process according to Claim 1, characterized in that the process fluid is passed first across the anode (5) and afterwards across the cathode (6).

3. Process according to Claim 1, characterized in that contaminated water is passed across the anode (5).

4. Process according to Claim 3, characterized in that the contaminated water, as a result of recirculation of a part thereof, is passed across the anode (5) at a higher velocity than that corresponding to the throughput rate through the electrolysis unit (3).

5. Process according to Claim 4, characterized in that the throughput rate and the recirculation rate are ratio-controlled.

6. Process according to Claim 1, characterized in that water purified by the deposition process is passed across the anode (5).

7. Process according to Claim 6, characterized in that the rate of the purified water passed across the anode (5) and the throughput rate of contaminated water are ratio-controlled.

8. Process according to Claim 1, characterized in that the throughput rate of contaminated water through the electrolysis unit (3) is controlled as a function of the degree of purity of the purified water.

9. Process according to Claim 1, characterized in that at least one coagulant aid is added to the contaminated water before and/or after the electrolysis.

10. Process according to Claim 9, characterized in that, respectively, an anionic or a cationic coagulant aid is added to the contaminated water before the electrolysis and a cationic or an anionic coagulant aid is added after the electrolysis.

11. Process according to Claim 9, characterized in that a high-molecular protein substance produced by crosslinking is used as the coagulant aid.

12. Process according to Claim 9, characterized in that, in the case of a series connection of two electrolysis units (3), different coagulant aids are added in each case before and/or after the electrolysis.

13. Process according to Claim 1, characterized in that the voltage difference between the electrodes (5,6) is 1.2 to 35 volt and the current density is 5 to 100 mA/cm² of electrode surface area.

14. Process according to Claim 1, characterized in that at least one electrode (5,6) is caused to vibrate longitudinally.

15. Process according to Claim 1, characterized in that the electrolysis unit (3) is flushed with clean water after the current has been switched off.

16. Equipment for carrying out the process according to Claim 1, consisting of a vessel (4) provided with a feed (2) and a discharge (15) for the process fluid, a sacrificial anode (5) and a cathode (6) being arranged in the vessel (4), and an electrical circuit for supplying the sacrificial anode (5) and the cathode (6) being provided, characterized in that a sheathing (7,33) of the anode (5) for guiding the process fluid is arranged in such a way that this process fluid is passed first across the anode (5) and transferred into the zone of the cathode (6) only afterwards, and that the connection is a series connection of the anode (5) and the cathode (6) with respect to the process fluid flowing across them.

17. Equipment according to Claim 16, characterized by a diaphragm (37) between the cathode (6) and the sheathing (33).

18. Equipment according to Claim 17, characterized in that the diaphragm (37) is electrically conductive at least on its surface.

19. Equipment according to Claim 16, characterized in that an ultrasonic vibration generator is fixed to at least one electrode (5,6).

**Revendications**

1.- Procédé de séparation de matières contenues dans de l'eau contaminée conductrice de l'électricité au moyen d'au moins un appareil d'électrolyse comprenant au moins deux électrodes, dont l'anode est constituée en anode consommable, de sorte qu'il se forme par le processus d'électrolyse à l'anode des cations et à la cathode de l'hydrogène et des ions hydroxyle, et les cations réagissent par contact avec les ions hydroxyle en donnant des hydroxydes métalliques qui adsorbent les matières contenues dans l'eau en formant des flocs, et les flocs formés sont ensuite séparés pour clarifier l'eau, caractérisé en ce qu'un liquide de traitement est conduit de manière continue d'abord sur l'anode (5) et est amené ensuite seulement au voisinage de la cathode (6), éventuellement après mélange avec l'eau contaminée.

2.- Procédé suivant la revendication 1, caractérisé en ce que le liquide de traitement est conduit d'abord sur l'anode (5) et ensuite sur la cathode (6).

3.- Procédé suivant la revendication 1, caractérisé en ce que l'eau contaminée est conduite sur l'anode (5).

4.- Procédé suivant la revendication 3, caractérisé en ce que l'eau contaminée est conduite, par recyclage d'une fraction de celle-ci, avec une plus grande vitesse sur l'anode (5) que celle correspondant à la quantité débitée par l'appareil d'électrolyse (3).

5.- Procédé suivant la revendication 4, caractérisé en ce que la quantité débitée et la quantité recyclée sont réglées en proportion l'une de l'autre.

6.- Procédé suivant la revendication 1, caractérisé en ce que de l'eau épurée dans le procédé de séparation est conduite sur l'anode (5).

7.- Procédé suivant la revendication 6, caractérisé en ce que la quantité d'eau épurée conduite sur l'anode (5) et la quantité débitée d'eau contaminée sont réglées en proportion l'une de l'autre.

8.- Procédé suivant la revendication 1, caractérisé en ce que la quantité d'eau contaminée débitée par l'appareil d'électrolyse (3) est réglée en fonction du degré de pureté de l'eau épurée.

9.- Procédé suivant la revendication 1, caractérisé en ce que l'eau contaminée est additionnée d'au moins un adjuvant de floculation avant et/ou après l'électrolyse.

10.- Procédé suivant la revendication 9, caractérisé en ce que l'eau contaminée est additionnée avant l'électrolyse d'un adjuvant de floculation anionique ou d'un adjuvant de floculation cationique et après l'électrolyse d'un adjuvant de floculation cationique ou d'un adjuvant de floculation anionique.

11.- Procédé suivant la revendication 9, caractérisé en ce qu'une albumine de haut poids moléculaire obtenue par réticulation est utilisée comme adjuvant de floculation.

12.- Procédé suivant la revendication 9, caractérisé en ce que lors de la connexion en série de deux appareils d'électrolyse (3), des adjuvants de floculation tour à tour différents sont ajoutés avant et/ou après l'électrolyse.

13.- Procédé suivant la revendication 1, caractérisé en ce que la différence de tension entre les électrodes (5, 6) est de 1,2 à 35 volts et la densité de courant est de 5 à 100 milliampères par $cm^2$ de surface d'électrode.

14.- Procédé suivant la revendication 1, caractérisé en ce qu'au moins une électrode (5, 6) est déplacée par oscillations longitudinales.

15.- Procédé suivant la revendication 1, caractérisé en ce que l'appareil d'électrolyse est rincé à l'eau pure après coupure du courant.

16.- Installation pour l'exécution du procédé suivant la revendication 1, qui consiste en un récipient (4) muni d'une admission (2) et d'une sortie (15) pour le liquide de traitement, une anode consommable (5) et une cathode (6) étant agencées dans le récipient (4) et une connexion électrique étant prévue pour alimenter l'anode consommable (5) et la cathode (6), caractérisée en ce qu'une enveloppe (7, 33) de l'anode (5) pour la conduite du liquide de traitement est agencée de façon que le liquide de traitement soit amené d'abord sur l'anode (5) et ensuite seulement au voisinage de la cathode (6) et que la connexion est une connexion en série de l'anode (5) et de la cathode (6) à l'égard du liquide de traitement qui les baigne.

17.- Installation suivant la revendication 16, caractérisée en ce qu'elle comprend un diaphragme (37) entre la cathode (6) et l'enveloppe (33).

18.- Installation suivant la revendication 17, caractérisée en ce que le diaphragme est conducteur de l'électricité au moins à sa surface.

19.- Installation suivant la revendication 16, caractérisée en ce qu'un générateur d'oscillations ultrasoniques est fixé à au moins une des électrodes (5, 6).

FIG.1

−2/2−

FIG. 2

3